# EUROPEAN PATENT SPECIFICATION

(11) **EP 0 501 159 B1**
(45) Date of publication and mention of the grant of the patent: **30.08.1995**
(21) Application number: 92101429.6
(22) Date of filing: 29.01.1992
(51) Int. Cl.: A23L 3/01, A23L 1/16

(54) **A method of producing dry pasta nests**
Verfahren zur Herstellung von getrockneten Teignestern
Procédé pour produire des nids de pâte séchés

(30) Priority: 27.02.1991 IT MI910507
(43) Date of publication of application: 02.09.1992
(73) Proprietor: BARILLA G. e R. F.lli - Società per Azioni, 43100 Parma (IT)
(72) Inventor: Guarneri, Roberto, I-43100 Parma (IT); Ferrari, Claudio, I-42100 Reggio Emilia (IT); Caselli, Oreste, I-42100 Reggio Emilia (IT); Levrieri, Achille, c/o Barilla G. e F.lli SpA, I-43100 Parma (IT)
(74) Representative: Vannini, Torquato

(56) References cited:
- EP-A- 0 366 867
- US-A- 3 908 029
- US-A- 4 468 865
- PATENT ABSTRACTS OF JAPAN vol. 6, no. 15 (C-89)(893), 28.01.1982; & JP-A-56137859 (DAINIPPON INSATSU K.K.) 28.10.1981

## Description

The present invention relates in general to a method of producing dry pasta nests. In particular, the object of the invention is to produce dry pasta nests packaged in dish-shaped containers of a suitable paper material and wrapped in transparent film.

In the description below and in the following claims, the term nests is intended to indicate fresh and dry pasta nests as well as the well-known and widely-used coils or other similar forms of pasta.

A method of the type in question consists essentially of forming fresh pasta nests, drying them until their moisture content is of the order of 11-13%, cooling them and, finally, packaging them, arranged in one or two layers, in dish-shaped containers.

According to a conventional technique, one method o producing nests provides for the nests to be formed and deposited in bulk on net fabric, they are then dried by means of flows of hot air and/or microwave with controlled flow-rates, temperatures and humidities (methods and apparatuses for drying pasta products are disclosed in US 3,908,029 and US 4,468,865); the dried nests are discharged in bulk onto storage belts and then arranged manually in the dish-shaped containers in which they are weighed, the weight is adjusted and, finally, they are wrapped in transparent film (flow-packs).

The worst problems encountered with this technique are constituted, in particular, by the large amount of waste produced, the damage to the shapes of the nests (by their loading and unloading in bulk onto and from the drying fabric), the use of manual labour for arranging the nests in the dish-shaped containers, and the time taken for the weighing and the weight-adjustment steps, the latter step necessarily involving the presence of scraps in the package which is put on sale with possible adverse effects on the producer's image.

In order to overcome these problems some improved methods have fairly recently been proposed and these generally provide for the newly-formed nests to be deposited on so-called channelled fabric, that is, fabric which is divided into a plurality of adjacent tracks each of which contains a number of rows of nests equal to the number provided for in the final packages, the nests are then dried, again with hot air, discharged neatly and simultaneously arranged in the dish-shaped containers and, finally, wrapped in transparent film.

Whilst, on the one hand, these techniques reduce or completely eliminate the problem of the production of waste, they still have the problem that they need fairly complex machines, equipment and devices arranged in line with the drier and requiring constant checking by one or more operators, as well as maintenance and setting-up operations.

Moreover, both the conventional technique and these more recent techniques have the considerable disadvantage of the presence of the fabric in view of its intrinsic cost, the cost of maintaining it, the complexity of the so-called FABRIC CIRCULATOR, storage, etc.

A first aspect of the problem upon which the present invention is based is that of overcoming once and for all the problems explained above with reference to the prior art.

The concept of the solution is to form the fresh nests directly in the dish-shaped containers, to dry the nests in the containers, to cool them and to wrap them in film.

The implementation of such a concept on the basis of conventional techniques, however, meets with considerable difficulties, particularly when the drying is carried out by means of a hot air-flow. In the first place, in fact, the dish-shaped containers of paper material, for example, card, constitute a serious obstacle to the even and uniform permeation of the nest by the drying air, to the extent that drying to the desired final humidity values cannot be achieved even if the time dedicated thereto is extended beyond the times provided for in the conventional technique. In the second place, drying with hot air causes a contraction in the volumes of the nests which may even be of the order of 15-18%. Nests dried in the containers would consequently no longer "fill" the containers in which they were originally deposited.

Moreover, the nests tend to collapse, that is, they form a mass in the dish-shaped container.

Not the least disadvantage is the prolonged contact of the fresh pasta with the paper material of the container which causes chemical contamination and consequent organoleptical and nutritional changes in the pasta.

The overall problem addressed by the present invention is therefore that of implementing the aforementioned concept of forming the nests directly in the dish-shaped containers which are used for their final packaging but avoiding the problems explained above in connection with their drying with hot air.

According to the invention, this problem is solved by a method including the steps of:
- forming fresh pasta nests and simultaneously depositing them neatly in dish-shaped containers,
- drying the nests in the containers by heating them with high-frequency energy and at the same time quickly removing all the moisture given off by the nests,
- cooling the nests in an ambient air-flow and sending the containers with the dried and cooled nests to be wrapped in film.

The use of high-frequency microwaves to dry the nests is not in the least obstructed by the presence of the dish-shaped containers in which the nests are neatly arranged. In fact, it is well-known that the paper material (card or the like) of which the containers are generally made is completely transparent to microwaves.

The removal of the moisture given off by the nests during their microwave treatment is of fundamental, even critical, importance for the success of the entire method of the invention. This removal must be complete and immediate so as to avoid any risk of the product sticking. Moreover, the formation of condensation (even traces) on the internal walls of the dish-shaped containers must be prevented.

According to one characteristic of the present invention, the moisture is removed by jets of cool air directed vertically towards the containers. The number of jets, their positions relative to the nest-containers, the speed and rate of the air-flow are calculated so as to ensure, on the one hand, that the nests are struck simultaneously and permeated throughout by the air-flow and, on the other hand, that a similar air-flow passes over the entire surfaces of the internal walls and the bases of the dish-shaped containers.

To advantage, the air of the jets is at a temperature of between 35 and 50°C, preferably 40°C, and has a relative humidity of 20-30%, preferably 25%.

As well as immediately removing the moisture and preventing the formation of condensation on the internal surfaces of the containers, these jets of cool air, which are directed straight into the dish-shaped containers, create a uniform microclimate in each dish-shaped container so that dehydration takes place uniformly throughout each nest and in all the nests; they also cool the most exposed portions of the product, enabling high-frequency microwaves with high energy loads to be used and, at the same time, preventing the "burning" which is characteristic of microwave treatments.

At this point, it is important to note that the rapid transfer of heat to the pasta (by the microwaves) and the fact that the transfer of heat and the removal of the moisture given off by the product can be regulated completely independently, optimise and accelerate the drying of the nests to the desired values.

It has also been found that, unlike the conventional techniques in which hot air was used for the drying, the drying of the nests by heating them with microwaves causes no apparent reduction in the volumes of the nests. At the end of the drying step according to the present invention, the nests therefore take up the entire dish-shaped container as they did when they were freshly formed therein.

By virtue of the absence of a reduction in apparent volume, the use of the cool-air jets to remove the moisture from the product and prevent the formation of condensation on the internal walls of the dish-shaped containers, and the transparency to microwaves of the material of the containers, microwaves can be used to dry the nests in the dishes. The concept of forming the nests directly in the dish-shaped containers which are used for their final packaging can thus be put into practice.

The technical problem described above and upon which the present invention is based is thus solved.

It is well known that although, on the one hand, the rapid heating of moist pasta with microwaves dries it to the desired values equally quickly, it may, on the other hand, give rise to high humidity gradients in the product, resulting in the formation of splits, minute fissures, cracks and similar problems due to the non-uniformity of the heating (which is characteristic of microwaves and of the nature of the product treated) and to the rate at which the steam is given off from within the pasta. In order to prevent these phenomena (which, like varied surface "colouring" of dried pasta, are disadvantageous), the nests output from the microwave and cool-air treatment are subjected to a step in which they are rehydrated slightly by jets of moist air with a high humidity, directed vertically towards the dish-shaped containers. This rehydration of the pasta constituting the nests simultaneously achieves an optimal distribution of the moisture and a more than satisfactory stabilisation of the product. It has been found that the best results are achieved when the dried nests are rehydrated by jets of moist air having a relative humidity of from 60-65% to 95-100% and a temperature of between 50° and 65°C.

On average, the rehydrated pasta acquires 1-2 percentage points of humidity which is immediately given up during the subsequent cooling in an ambient air-flow.

The characteristics and advantages of the invention will become clearer from the following description of a method according to the invention, with reference to the appended drawings given purely by way of non-limiting example, in which:
Fig. 1 shows schematically equipment for carrying out the method of the invention for producing single-layer packages of pasta nests,

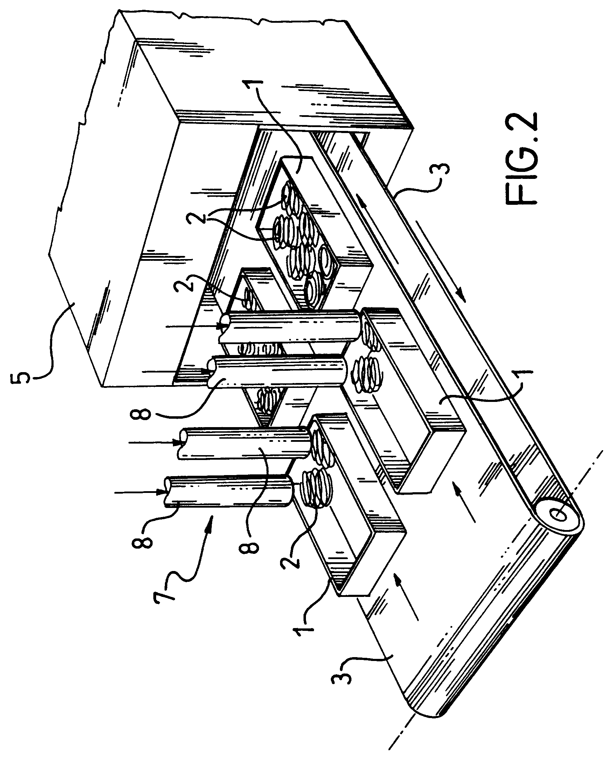

Fig. 2 shows in perspective the input side of the equipment of Fig. 1,
Fig. 3 shows schematically a variant of the equipment of Fig. 1 for producing packages with two superposed layers of nests.

With reference to the drawings, dish-shaped containers, indicated 1, of card or a similar paper material transparent to microwaves are of the type widely used for the packaging of pasta, particularly pasta in the form of nests 2, coils, and other similar forms.

An endless belt conveyor 3 extends from a nest-forming station 4, through a pasta-drying tunnel 5 to a conventional film-wrapping (flow-pack) station 6.

The forming station 4, which is shown entirely schematically, includes a wholly conventional nest-forming device 7 including a plurality of forming tubes 8 extending vertically above the conveyor 3 and arranged beside each other in alignment transverse the conveyor.

The drying tunnel 5, which is also shown entirely schematically, includes, essentially, a first region 9 with upper and lower magnetrons 10 for emitting microwaves of the desired power, as well as a plurality of air-injection nozzles 11 extending vertically above the conveyor 3 and connected by a connector 12 to a compressed-air source, not shown. It should be noted that the nozzles 11 are arranged in one or more groups, each within the periphery of a dish-shaped container 1 used for the packaging of the nests. A second region 13 is equipped with a plurality of upper nozzles 14 which extend vertically over the conveyor 3 and communicate, through a manifold 15, with a source 16 of moist compressed air. There is a third region 17 in which cooling takes place in an ambient air-flow generated, for example, by a fan 18.

In the station 4, the pasta nests 2 are formed and simultaneously deposited neatly in a single layer (for example in two rows with three nests per row) in a dish-shaped container 1 by the nest-forming machine 7 and its forming tubes 8. The pasta of the nests 2 is fresh pasta and has a moisture content of about 32%.

The containers 1 filled with nests 2 are admitted to the first region 9 of the drying tunnel 5 where the nests are dried by the action of the microwaves generated by the magnetrons 10. Simultaneously with the action of the microwaves but independently thereof, the nests are struck and permeated by a plurality of vertical jets of cool air, the purpose of which is to remove the moisture and take it away from the nests as soon as it is generated and to cool the surface of the product being dried to prevent the typical burning. The formation of condensation on the internal walls of the dish-shaped containers 1 in question is simultaneously prevented by further vertical jets of cool air. The air jets may be continuous or may be emitted at intervals of a few seconds in dependence on specific requirements and the characteristics (the humidity, temperature, speed and rate) of the air-flow. Optimal results are achieved with continuous jets of air at a temperature of 45°C and with 25% relative humidity. After a very short time, which may vary from 30 to 40 minutes, the moisture content of the nest is reduced, on average, to the predetermined value of 11-12%. After remaining in (or rather passing through) the first region 9 of the drying tunnel 5 for this period of time, the containers 3 are admitted to the second region 13 where the nests undergo a rehydration and stabilisation step effected by a plurality of jets of moist air from the nozzles 14. The purpose of these jets is to even out the moisture in the pasta of the previously dried nests; upon completion of this step, the nests have acquired one or two percentage points of humidity with reference to the humidity reached in the previous microwave drying step. With the use of air at a temperature of 50-55°C and 95% relative humidity, the rehydration and stabilisation step is completed in 8-10 minutes. In the third region 17 of the tunnel 5 the rehydrated nests are cooled by an ambient air-flow and, in this step, lose the moisture gained in the previous step, resuming a humidity value substantially equal to the value (the predetermined value) reached in the microwave drying step.

The containers with their dried nests output from the tunnel 5 are sent as they are to be wrapped in film.

If two layers of fresh nests are to be formed and deposited in a single dish-shaped container, the air jets used simultaneously with the microwave heating may not effectively remove the moisture from the nests of the lower layer or prevent the formation of condensation on the base of the container.

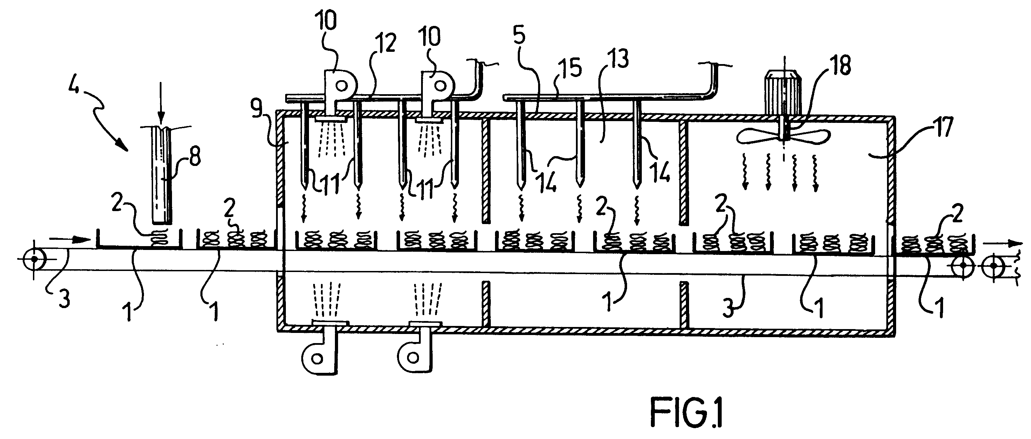

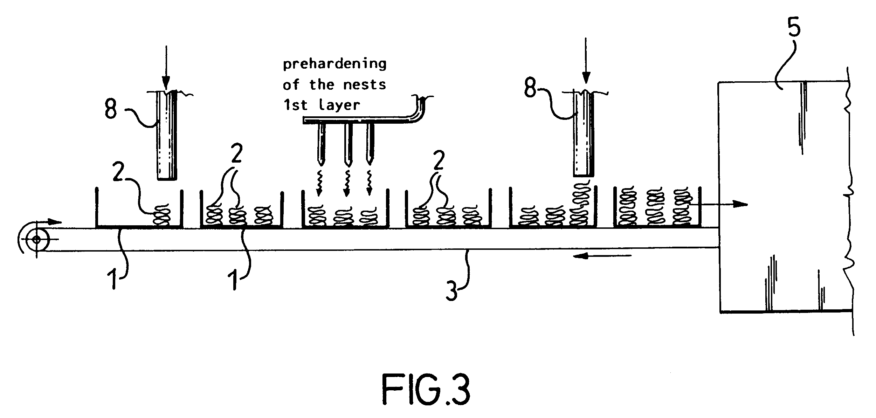

With reference to Fig. 3, according to a further characteristic of the invention, in order to prevent this possibility, the first layer of nests undergoes a gentle heat treatment to preharden the nests on which the second layer of nests is then deposited. The container is then transported into the drying tunnel 5 to undergo the treatment described above with reference to Fig. 1.

It has been found that, particularly in the case of containers with two layers of nests, the best results are achieved when the side walls of the dish-shaped container have suitable holes.

## Claims

1. A method of producing dry pasta nests in dish-shaped containers wrapped in film, characterised in that it includes the steps of:
- forming fresh pasta nests and simultaneously depositing them neatly in dish-shaped containers, drying the nests in the containers by heating them with high-frequency microwave energy and at the same time quickly removing all the moisture given off by the nests,
- cooling the nests in an ambient air-flow and sending the containers with the dried and cooled nests to be wrapped in film.

2. A method according to Claim 1, characterised in that the moisture given off by the nests is removed by jets of cool air having a temperature between 35 and 50°C and relative humidity between 20 and 30%, said air jets being directed at the nests and the internal walls of their dish-shaped containers.

3. A method according to Claim 2, characterized in that the jets of cool air are oriented vertically.

4. A method according to Claim 1, characterised in that, before they are cooled in an ambient air-flow, the dried nests in their dish-shaped containers are subjected to a step in which they are rehydrated slightly and stabilised.

5. A method according to Claim 4, characterised in that the slight rehydration and stabilisation step is carried out by means of a moist air-flow with 60 to 100% relative humidity and a temperature between 50 and 65°C.

6. A method according to Claim 5, characterised in that the relative humidity of the moist air is 95% and its temperature is 55°C.

7. A method according to Claim 5, characterised in that the slight rehydratation step increases the relative humidity of the nests by one-two percentage points with reference to the humidity value reached in the microwave drying step.

8. A method according to Claim 7, characterized in that the increase in the relative humidity of the rehydratated and stabilised nests is cancelled out during the subsequent step in which they are cooled in an ambient air-flow.

9. A method according to Claim 1, characterised in that the fresh pasta nests are deposited neatly in two layers in their dish-shaped containers.

10. A method according to Claim 9, characterised in that the nests of the first layer are subjected to gentle, prehardening heat treatment.

## Patentansprüche

1. Verfahren zur Herstellung von Trockennudelnestern in schüsselförmigen, in einem Überzug eingewickelten Behältnissen, dadurch gekennzeichet, daß es die folgenden Schritte umfaßt:
- Ausbilden von frischen Nudelnestern und gleichzeitig Ablegen von diesen sauber in schüsselförmige Behältnisse, Trocknen der Nester in den Behältnissen durch Erhitzen von diesen mit Hochfrequenzmikrowellenenergie und gleichzeitig schnelles Entfernen der gesamten von den Nestern abgegebenen Feuchtigkeit,
- Kühlen der Nester in einem Umgebungsluftstrom und Senden der Behältnisse mit den getrockneten und gekühlten Nestern zum Einwickeln in einen Überzug.

2. Verfahren nach Anspruch 1, dadurch gekennzeichnet, daß die von den Nestern abgegebene Feuchtigkeit mittels Kaltluftströmen mit einer Temperatur zwischen 35 und 50°C und einer relativen Feuchtigkeit zwischen 20 und 30% entfernt wird, wobei die Ströme auf die Nester und die inneren Wände ihrer schüsselförmigen Behältnisse gerichtet sind.

3. Verfahren nach Anspruch 2, dadurch gekennzeichnet, daß die Kaltluftströme vertikal ausgerichtet sind.

4. Verfahren nach Anspruch 1, dadurch gekennzeichnet, daß die getrockneten Nester, bevor sie in einem Umgebungsluftstrom gekühlt werden, in ihren schüsselförmigen Behältnissen einem Schritt unterzogen werden, in welchem sie leicht rehydratisiert und gefestigt werden.

5. Verfahren nach Anspruch 4, dadurch gekennzeichnet, daß der Schritt der leichten Rehydration und Festigung mittels eines feuchten Luftstroms mit 60 bis 100% relativer Luftfeuchtigkeit und einer Temperatur zwischen 50 und 65°C ausgeführt wird.

6. Verfahren nach Anspruch 5, dadurch gekennzeichnet, daß die relative Luftfeuchtigkeit der feuchten Luft 95% und ihre Temperatur 55°C beträgt.

7. Verfahren nach Anspruch 5, dadurch gekennzeichnet, daß der Schritt der leichten Rehydration die relative Luftfeuchtigkeit der Nester um ein bis zwei Prozentpunkte, bezogen auf den Luftfeuchtigkeitswert, welcher durch den Mikrowellen-Trocknungsschritt erreicht wird, erhöht.

8. Verfahren nach Anspruch 7, dadurch gekennzeichnet, daß die Erhöhung der relativen Luftfeuchtigkeit der rehydratisierten und gefestigten Nester während des nachfolgenden Schritts, in welchem sie in einem Umgebungsluftstrom gekühlt werden, rückgängig gemacht wird.

9. Verfahren nach Anspruch 1, dadurch gekennzeichnet, daß die frischen Nudelnester sauber in zwei Lagen in ihren schüsselförmigen Behältnissen abgelegt werden.

10. Verfahren nach Anspruch 9, dadurch gekennzeichnet, daß die Nester der ersten Lage einer sanften, vorhärtenden Hitzebehandlung unterzogen werden.

## Revendications

1. Procédé de fabrication de blocs de pâtes alimentaires sèches dans des récipients en forme de plat enveloppés dans du film, caractérisé en ce qu'il comprend les étapes de :
- formation des blocs de pâtes fraîches et dépôt simultané de celles-ci, avec soin, dans des récipients en forme de plat, séchage des blocs qui se trouvent dans les containers en les chauffant au moyen de micro-ondes à haute fréquence et en même temps enlèvement rapide de toute l'humidité produite par les blocs,
- refroidissement des blocs dans un courant d'air ambiant et envoi des récipients contenant les blocs séchés et refroidis pour être enveloppés dans du film.

2. Procédé selon la revendication 1, caractérisé en ce que l'humidité produite par les blocs est enlevée au moyen de jets d'air froid ayant une température entre 35 et 50°C et une humidité relative entre 20 et 30%, lesdits jets d'air étant dirigés vers les blocs et vers les parois intérieures de leurs récipients en forme de plat.

3. Procédé selon la revendication 2, caractérisé en ce que les jets d'air froid sont orientés dans le sens vertical.

4. Procédé selon la revendication 1, caractérisé en ce que, avant qu'ils ne soient refroidis dans le courant d'air ambiant, les blocs séchés qui se trouvent dans leurs récipients en forme de plat sont soumis à une étape dans laquelle ils sont légèrement réhydratés et stabilisés.

5. Procédé selon la revendication 4, caractérisé en ce que l'étape de réhydratation légère et de stabilisation est exécutée au moyen d'un courant d'air humide ayant une humidité relative de 60 à 100% et une température entre 50 et 65%C.

6. Procédé selon la revendication 5, caractérisé en ce que l'humidité relative de l'air humide est de 95% et en ce que sa température est de 55°C.

7. Procédé selon la revendication 5, caractérisé en ce que l'étape de réhydratation légère augmente l'humidité relative des blocs de 1 à 2% par rapport à la valeur d'humidité atteinte pendant l'étape de séchage par micro-ondes.

8. Procédé selon la revendication 7, caractérisé en ce que l'augmentation de l'humidité relative des blocs réhydratés et stabilisés est annulée durant l'étape suivante dans laquelle ils sont refroidis par un courant d'air ambiant.

9. Procédé selon la revendication 1, caractérisé en ce que les blocs de pâtes fraîches sont déposés avec soin pour former deux couches dans leurs récipients en forme de plat.

10. Procédé selon la revendication 9, caractérisé en ce que les blocs de la première couche sont soumis à un traitement modéré de pré-durcissement par la chaleur.
